# EUROPÄISCHE PATENTANMELDUNG

(11) **EP 1 247 958 A1**
(43) Veröffentlichungstag der Anmeldung: **09.10.2002**
(21) Anmeldenummer: 01108781.4
(22) Anmeldetag: 07.04.2001
(51) Int. Cl.: F02B 75/04, F16C 7/06

(54) **Verbrennungskraftmaschine mit veränderlichem Verdichtungsverhältnis**

(71) Anmelder: Ford Global Technologies, Inc., A subsidiary of Ford Motor Company, Dearborn, Michigan 48126 (US)
(72) Erfinder: Weiss, Edwin, 51647 Gummersbach (DE)
(74) Vertreter: Drömer, Hans-Carsten, Dipl.-Ing.

(57) **Zusammenfassung**

Die Erfindung betrifft eine Kurbelwelle (1) für eine Hubkolbenbrennkraftmaschine, bei der die Pleuelstangen unter Zwischenschaltung einer exzentrischen Hülse (4) auf dem Kurbelzapfen (3) einer Kurbelwelle (1) gelagert sind. Eine Rotation der exzentrischen Hülse (4) bezüglich des Kurbelzapfens (3) führt daher zu einer Veränderung der effektiven Länge der Pleuelstange. Die Rotation der Hülse (4) wird über einen elektrischen oder hydraulischen Motor (7) bewirkt, welcher eine Schnecke (6) antreibt, die in eine Außenverzahnung (5) der Hülse (4) eingreift. Durch den aktiven Antrieb ist eine Drehung der Hülse (4) auch dann gewährleistet, wenn die Eigendrehung aufgrund von Verschleißerscheinungen beeinträchtigt ist. Weiterhin wird durch eine selbsthemmende Ausbildung des Schneckengetriebes erreicht, dass die Hülse (4) bei abgeschaltetem Antrieb (7) in ihrer eingestellten Position arretiert ist.

## Beschreibung

Die Erfindung betrifft eine Kurbelwelle für eine Hubkolbenbrennkraftmaschine, enthaltend einen Kurbelzapfen sowie eine auf dem Kurbelzapfen mit ihrer zylindrischen Innenfläche drehbar gelagerte exzentrische Hülse.

Eine Kurbelwelle der eingangs genannten Art ist aus der DE 197 03 948 C1 bekannt. Eine derartige Kurbelwelle dient dazu, die Verdichtung einer Hubkolbenbrennkraftmaschine dadurch zu verändern, dass wie nachfolgend beschrieben die wirksame Länge der Pleuelstange verkürzt oder verlängert wird.

Eine Pleuelstange ist in bekannter Weise mit ihrem ersten Ende gelenkig am Kolben befestigt, welcher sich im Zylinder des Motors auf und ab bewegt. Mit ihrem zweiten Ende ist die Pleuelstange gelenkig am Kurbelzapfen der Kurbelwelle befestigt. Über die Pleuelstange wird die lineare Auf- und Abbewegung des Kolbens in eine kontinuierliche Drehbewegung der Kurbelwelle umgewandelt. Gemäß der DE 197 03 948 C1 ist die Pleuelstange dabei mit ihrem zweiten Ende über eine zwischengeschaltete exzentrische Hülse auf dem Kurbelzapfen gelagert. Die exzentrische Hülse weist eine zylindrische Innenfläche und eine hierzu exzentrische zylindrische Außenfläche auf. Je nach Drehung dieser exzentrischen Hülse relativ zum Kurbelzapfen beziehungsweise zur Pleuelstange ergibt sich für die Pleuelstange eine unterschiedliche wirksame Länge, welche als Abstand zwischen der Drehachse der Pleuelstange am Kolben und der Drehachse der Pleuelstange am Kurbelzapfen definiert werden kann. Durch eine Drehung der exzentrischen Hülse kann somit die im Hubraum des Motorkolbens eintretende Verdichtung und damit das Motorverhalten verändert werden.

Nachteilig bei der bekannten Anordnung ist unter anderem, dass die selbständige Drehung der Hülse aufgrund von unweigerlich auftretenden Abnutzungserscheinungen bei einem längeren Betrieb der Hubkolbenbrennkraftmaschine verloren gehen kann. In diesem Falle ist die ordnungsgemäße Funktion der Längenveränderung der Pleuelstange nicht mehr gewährleistet.

Aus der JP 57040 ist ein anderer Mechanismus zur Veränderung der effektiven Länge einer Pleuelstange bekannt. Bei diesem sind die Lagerzapfen einer Kurbelwelle über zwischengeschaltete exzentrische Hülsen an der Karosserie des Fahrzeuges gelagert. Die Hülsen können über einen elektrischen Antrieb gedreht werden, so dass sich die Achslage der Kurbelwelle und damit die effektive Länge jeder daran befindlichen Pleuelstange ändert. Nachteilig bei dieser Anordnung ist, dass die Lageveränderung der gesamten Kurbelwelle komplizierte Anpassungen im vorangehenden und nachfolgenden Kraftübertragungsweg erfordert. Ferner müssen alle Lager der Kurbelwelle synchron gedreht werden, damit die Achse der Kurbelwelle nicht verkantet wird. Ein weiterer Nachteil besteht darin, dass die Längenveränderung nur für alle Pleuelstangen des Motors gleichzeitig vorgenommen werden kann.

Vor diesem Hintergrund war es Aufgabe der vorliegenden Erfindung, eine Kurbelwelle der eingangs genannten Art derart zu verbessern, dass sie in einfacher Weise für einen langfristig zuverlässigen Betrieb des Motors eingerichtet ist.

Diese Aufgabe wird durch eine Kurbelwelle mit den Merkmalen des Anspruchs 1 gelöst. Vorteilhafte Ausgestaltungen sind in den Unteransprüchen enthalten.

Die Kurbelwelle für eine Hubkolbenbrennkraftmaschine enthält demnach mindestens einen Kurbelzapfen, welcher in üblicher Weise exzentrisch zur Drehachse der Kurbelwelle angeordnet ist. Weiterhin enthält die Kurbelwelle eine exzentrische Hülse, die mit ihrer zylindrischen Innenfläche drehbar auf dem Kurbelzapfen gelagert ist und deren zylindrische Außenfläche exzentrisch zur Innenfläche liegt. An der Außenfläche der Hülse kann das eine Ende einer Pleuelstange gelagert werden, wobei durch eine Drehung der Hülse um den Kurbelzapfen aufgrund der Exzentrizität der Hülse die wirksame Länge der Pleuelstange verändert werden kann. Die Kurbelwelle ist dadurch gekennzeichnet, dass die Hülse mit einem Antriebsmittel so in Eingriff steht, dass sie sich nur bei Aktivierung des Antriebsmittels relativ zum Kurbelzapfen dreht. Vorzugsweise ist das Antriebsmittel dabei an der Kurbelwelle befestigt, so dass es sich mit dieser zusammen dreht.

Durch die Ankopplung der Hülse an ein aktives Antriebsmittel kann gewährleistet werden, dass sich auch bei fortgeschrittenem Alter des Motors und den dabei auftretenden Verschleißerscheinungen die Hülse noch in der gewünschten Weise bewegt, um die erforderlichen Längenveränderungen der Pleuelstange zu bewirken. Da sich das Antriebsmittel nur bei Aktivierung dreht, sorgt es gleichzeitig für eine Arretierung der Drehbewegung der Hülse um den Kurbelzapfen in den gewünschten Positionen, wobei Letztere in der Regel der minimalen beziehungsweise maximalen effektiven Länge der Pleuelstange entsprechen. Ohne Aktivierung steht das Antriebsmittel dagegen still und hält dann auch die Hülse in ihrer momentanen Position fest.

Das Antriebsmittel kann gemäß einer bevorzugten Ausgestaltung durch einen Motor gebildet werden, der eine Schnecke antreibt, wobei die Schnecke in eine an der Hülse ausgebildete Verzahnung eingreift. Bei dieser Anordnung kann der Motor die Schnecke in eine Drehbewegung um ihre Längsachse versetzen, welche wiederum über die Verzahnung der Hülse in eine Rotationsbewegung der Hülse umgewandelt wird.

Das aus der Verzahnung der Hülse und aus der Schnecke bestehende Getriebe ist vorzugsweise selbsthemmend ausgebildet. Dies bedeutet, dass ohne eine aktive Drehung der Schnecke durch den Motor keine Relativbewegung zwischen der Verzahnung und der Schnecke stattfindet. Insbesondere können auf die Hülse einwirkende Drehmomente nicht zu einer Drehung der Hülse führen, da sie nicht in der Lage sind, die hierzu notwendige Mitdrehung der Schnecke zu erzeugen. Eine solche selbsthemmende Ausgestaltung des Getriebes hat den Vorteil, dass sie auch bei Ausfall der aktiven Antriebssysteme funktionsfähig bleibt und die Hülse in ihrer eingestellten Position sicher arretiert.

Das Antriebsmittel kann gemäß einer Weiterbildung der Erfindung hydraulisch ausgebildet sein. Das heißt, dass die notwendige Bewegungsenergie über ein unter Druck stehendes Hydraulikmedium wie etwa ein Hydrauliköl bereitgestellt wird.

Die Zufuhr des Hydraulikmediums zu einem hydraulisch betriebenen Antriebsmittel kann dabei insbesondere über separate Zufuhrkanäle erfolgen, welche innerhalb der Kurbelwelle auszubilden sind. Das Antriebsmittel kann jedoch auch an die vorhandene Ölversorgung angeschlossen sein, welche innerhalb einer Kurbelwelle zur Versorgung der Lager mit Schmiermittel ausgebildet ist. Ein solcher Anschluss des Antriebsmittels an die Ölversorgung der Kurbelwelle findet vorzugsweise über mindestens ein Ventil statt, welches von außen steuerbar geöffnet und geschlossen werden kann. Auf diese Weise kann das Antriebsmittel von extern aktiviert und deaktiviert werden.

Alternativ und/oder ergänzend kann das Antriebsmittel auch so ausgestaltet sein, dass es elektrisch zu betreiben ist. Insbesondere kann es sich bei dem Antriebsmittel um einen Elektromotor handeln.

Die notwendige elektrische Energie wird einem solchen elektrischen Antriebsmittel vorzugsweise über Leitungen zugeführt, welche durch die Kurbelwelle verlaufen und an Schleifkontakte angeschlossen sind, so dass der elektrische Strom von einer mit der Karosserie verbundenen Stromquelle auf die rotierende Kurbelwelle übertragen werden kann.

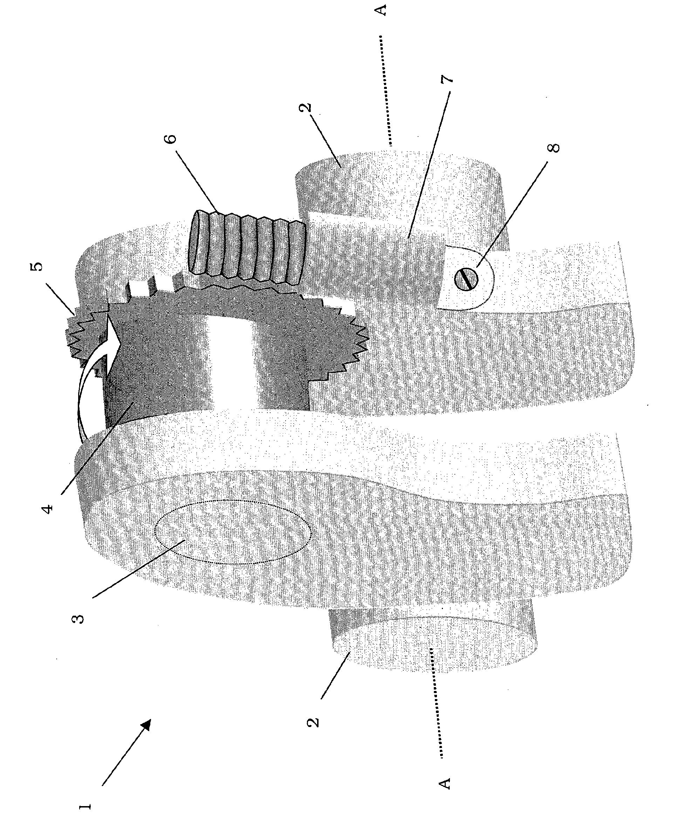

Im Folgenden wird die Erfindung mit Hilfe der Figur beispielhaft erläutert. Die einzige Figur zeigt perspektivisch einen Teil einer Kurbelwelle mit einer darauf gelagerten exzentrischen Hülse.

Der in der Figur dargestellte Abschnitt der Kurbelwelle 1 umfasst den Bereich eines einzelnen Kurbelzapfens 3, welcher exzentrisch zur Achse A der Kurbelwelle zwischen zwei Lagerzapfen 2 angebracht ist. Bei einer mehrzylindrigen Brennkraftmaschine ist ein solcher Kurbelzapfen für jeden Zylinder der Maschine vorgesehen.

Auf dem Kurbelzapfen 3 ist eine exzentrische Hülse 4 drehbar gelagert. Auf der zylindrischen Außenfläche der Hülse 4 ist wiederum das Auge einer Pleuelstange (nicht dargestellt) gelagert, wobei die Pleuelstange in bekannter Weise die Verbindung zu einem Kolben der Brennkraftmaschine herstellt. Durch eine Rotation der exzentrischen Hülse 4 um 180° in Pfeilrichtung lässt sich aufgrund der Exzentrizität die effektive Länge der Pleuelstange zwischen einem Minimum und einem Maximum verändern. Die Hauptdrehbewegung zwischen dem Lager auf der Kurbelwelle und der Pleuelstange findet somit an der Außenfläche der exzentrischen Hülse 4 statt. Die Phasenverschiebung zur Kontrolle des Kompressionsverhältnisses findet dagegen an der Innenseite der exzentrischen Hülse 4 zwischen dem Kurbelzapfen 3 und der Hülse 4 statt.

Die Rotation der Hülse 4 wird bei der erfindungsgemäßen Anordnung aktiv durch einen Motor 7 bewirkt, welcher über Verschraubungen 8 an der Kurbelwelle befestigt ist. Der Motor 7 treibt eine Schnecke 6 an, welche ihrerseits mit einer Außenverzahnung 5 am radial abstehenden Rand der Hülse 4 in Eingriff steht. Eine Drehbewegung der Schnecke 7 führt somit zu einer entsprechenden Drehung der Hülse 4 um ihr Lager auf dem Kurbelzapfen 3 (s. Pfeil).

Die Übersetzung zwischen der Verzahnung 5 der Hülse 4 und der Schnecke 6 ist so gewählt, dass der resultierende Antrieb selbsthemmend ist (allgemein: die Steigung des Schraubenrades ist kleiner als der Reibwinkel am Rad). Auf die Hülse 4 wirkende Drehmomente können daher nicht die Schnecke 6 in Drehung versetzen, so dass die Hülse 4 in ihrer momentan eingestellten Position arretiert bleibt, wenn der Motor 7 nicht angetrieben wird. Falls das aktive Antriebssystem daher einmal ausfallen sollte, verharrt die Anordnung auf der Kurbelwelle 1 automatisch in ihrer eingestellten Position, was einen weiteren Betrieb der Brennkraftmaschine gewährleistet.

Wenn die Lagerflächen und die entsprechenden Geometrien der Hülse 4 und der Kurbelwelle 1 sowie des Pleuels korrekt ausgelegt werden, findet die Drehung der Hülse 4 relativ zum Kurbelzapfen 3 aufgrund der herrschenden Kraftverhältnisse automatisch in einer für das Verbrennungsverhalten wünschenswerten Weise statt. Ein aktiver Eingriff in dieses System ist im Wesentlichen nur notwendig, um bestimmte Stellungen der Hülse 4 zu arretieren. Eine solche Arretierung wird, wie oben bereits erläutert wurde, im dargestellten Beispiel durch das Schneckengetriebe erreicht.

Die physikalischen und geometrischen Bedingungen für eine selbständige und leichte Drehung der Hülse 4 können allerdings in der Regel nur für eine begrenzte Zeitdauer an einer neu hergestellten Kurbelwelle garantiert werden. Wenn das Fahrzeug dagegen eine höhere Lebensdauer erreicht hat, nimmt die freie Drehbarkeit aufgrund unvermeidlicher Verschleißerscheinungen im Allgemeinen spürbar ab. In diesem Falle garantiert der aktive Antrieb durch das Schneckengetriebe mit dem Motor 7 und der Schnecke 6 auch weiterhin eine ordnungsgemäße Rotation der Hülse 4 entsprechend den gewünschten einzustellenden Kompressionsverhältnissen der Brennkraftmaschine. Zur Erzeugung einer Hülsendrehung muss dabei das aus Motor 7, Schnecke 6 und Verzahnung 5 bestehende System typischerweise ein Drehmoment von ca. 2 - 4 Nm zwischen den inneren und äußeren Durchmessern der Hülse 4 gewährleisten.

Der Antrieb 7 für die Schnecke 6 kann als elektrischer oder hydraulischer Antrieb ausgebildet sein. Im Falle eines Elektromotors 7 wird ein Kabel für die Stromversorgung in der Kurbelwelle 1 verlegt, während die Verbindung zur Masse zentral über einen Gleitzapfen abgeleitet wird.

Für einen Hydraulikmotor kann eine zweite Ölleitung in der Kurbelwelle 1 verwendet werden, welche entsprechend zu bohren oder beim Guss herzustellen ist. Über eine solche zusätzliche Leitung kann dann der Hydraulikmotor separat angesteuert und angetrieben werden. Alternativ kann der Hydraulikmotor auch an demselben Ölversorgungssystem angeschlossen sein wie die Lager entlang der Kurbelwelle. In diesem Falle wird der Hydraulikmotor mit einem Kugelfederventil in der Kurbelwelle über den ansteigenden und abfallenden Öldruck geschaltet, welcher durch eine Ölpumpe mit variablem Öldruck gesteuert wird.

## Patentansprüche

1. Kurbelwelle für eine Hubkolbenbrennkraftmaschine, enthaltend einen Kurbelzapfen sowie eine auf dem Kurbelzapfen mit ihrer zylindrischen Innenfläche drehbar gelagerten exzentrische Hülse,
**dadurch gekennzeichnet, dass** die exzentrische Hülse (4) mit einem Antriebsmittel (6, 7) in Eingriff steht, so dass sie sich nur bei Aktivierung des Antriebsmittels relativ zum Kurbelzapfen (3) dreht.

2. Kurbelwelle nach Anspruch 1,
**dadurch gekennzeichnet, dass** das Antriebsmittel durch einen Motor (7) mit einer Schnecke (6) gebildet wird, wobei die Schnecke in eine Verzahnung (5) der Hülse (4) eingreift.

3. Kurbelwelle nach Anspruch 2,
**dadurch gekennzeichnet, dass** das aus der Verzahnung (5) der Hülse (4) und aus der Schnecke (6) bestehende Getriebe selbsthemmend ausgebildet ist.

4. Kurbelwelle nach einem der Ansprüche 1 bis 3,
**dadurch gekennzeichnet, dass** das Antriebsmittel (7) hydraulisch betrieben ist.

5. Kurbelwelle nach Anspruch 4,
**dadurch gekennzeichnet, dass** das Antriebsmittel (7) über wenigstens ein steuerbares Ventil an die Ölversorgung der Lagerungen der Kurbelwelle (1) angeschlossen ist.

6. Kurbelwelle nach einem der Ansprüche 1 bis 5,
**dadurch gekennzeichnet, dass** das Antriebsmittel elektrisch betrieben ist.

7. Kurbelwelle nach Anspruch 6,
**dadurch gekennzeichnet, dass** an Schleifkontakte angeschlossene Leitungen in der Kurbelwelle angeordnet sind, über welche dem Antriebsmittel elektrische Energie zugeführt werden kann.
